# EUROPEAN PATENT SPECIFICATION

(11) **EP 2 512 766 B1**
(45) Date of publication and mention of the grant of the patent: **23.11.2016**
(21) Application number: 10793247.7
(22) Date of filing: 16.12.2010
(51) Int. Cl.: B29C 39/24, B29C 39/42, B29D 11/00

(54) **PROCESS AND APPARATUS FOR DISPENSING A FLOWABLE MATERIAL INTO A MOLD**
VERFAHREN UND VORRICHTUNG ZUR AUSGABE EINES FLIESSFÄHIGEN MATERIALS IN EINE GUSSFORM
PROCEDE ET APPAREIL POUR DISTRIBUER UN MATERIAU FLUIDE DANS UN MOULE

(30) Priority: 17.12.2009 US 287487 P
(43) Date of publication of application: 24.10.2012
(73) Proprietor: Novartis AG, 4056 Basel (CH)
(72) Inventor: BRAUN, Matthias, 63839 Kleinwallstadt (DE); HEINRICH, Axel, 63743 Aschaffenburg (DE); HAGMANN, Peter, 63906 Erlenbach am Main (DE)
(74) Representative: Bohest AG
(86) International application number: PCT/EP2010/069943
(87) International publication number: WO 2011/073333

(56) References cited:
- US-A- 4 191 805
- US-A- 5 271 874

## Description

### FIELD

The present invention relates to a process and apparatus for dispensing a flowable material into a mold. More specifically, the invention deals with a process and apparatus for dispensing a flowable material containing a volatile solvent into a mold, in particular a material for forming an ophthalmic lens, e.g. a contact lens.

### BACKGROUND

Today the mass manufacture of contact lenses, for example contact lenses which are disposed of after being worn, and especially of single wear contact lenses, is performed in a highly automated manufacturing process. Typically, in such process a predetermined amount of a starting material is dispensed into a female mold half, e.g. with the aid of a dosing tip. Subsequently, the mold is closed with the aid of a corresponding male mold half, and thereafter the material contained in the mold is polymerized and/or cross-linked so as to form the contact lens. Depending on the starting material used it must contain a suitable amount of one or more solvents which are often volatiles so as to keep the starting material in a flowable state. If the amount of solvent is insufficient, in particular during the manufacture of so-called silicon hydrogel lenses the lenses may show streaks or other defects or undesirable property changes on or in the formed lens which negatively affect optical properties or visual acuity of the lenses. A further disadvantage which may occur especially during the manufacture of silicon hydrogel lenses is that small residues of starting material may remain on the dosing tip and may negatively affect the accuracy of the amount of starting material dispensed into the mold, with the possible result that the lenses may be imperfect and have to be rejected.

US 5 271 874 A discloses a method and apparatus according to the preamble of the independent claims.

### SUMMARY

In order to overcome these problems, the present invention suggests a process for dispensing a material containing volatile solvent into a mold, in particular a material for forming ophthalmic lenses, e.g. contact lenses, as it is specified in the independent claim directed to the process. More specific variants of the process according to the invention are the subject of the dependent process claims.

In particular, in accordance with the invention the process for dispensing a flowable material comprising a volatile solvent into a mold, in particular a material for forming an ophthalmic lens, e.g. a contact lens, comprises the steps of claim 1.

The local gas atmosphere preventing the solvent from evaporating from the flowable material results in that the flowable material remains in a flowable state and does not inadvertently dry, thus preventing any residues remaining on the dosing tip from drying and obstructing the proper dispensing function of the dosing tip during the next dosing operation, so that the accuracy of the amount of starting material dispensed into the mold is ensured. Also, depending on the starting material used and depending on how the further manufacturing process is performed, the occurrence of streaks or other defects in the manufactured lenses is at least greatly reduced if not completely avoided. In the following, whenever the term "mold" is used it is intended to also comprise a part of a mold such as a mold half wherever this is appropriate. For example, while the starting material is typically dispensed into a female mold half, it is conceivable that the mold is already closed or semi-closed but that the closed or semi-closed mold has means (such as channels or suitable other means) allowing the material to be dispensed into the closed or semi-closed mold.

In accordance with one variant of the process according to the invention, after dispensing the flowable material the mold is closed, and during the step of dispensing until after the closing of the mold the flowable material is exposed only to the said local gas atmosphere. This variant is particularly advantageous in case the solvent is highly volatile so that it would otherwise evaporate within a very short period of time and, as a consequence, the starting material would dry within a very short period of time, with the negative consequences already discussed above. As will be shown in more detail in the description of embodiments of the invention, by way of example the step of closing the mold can be a one-step or a two-step operation. In particular, completely closing the mold may be a two-step operation with the first step being bringing the mold halves into engaging alignment without completely closing them and with the second step being the complete closing of the mold thus "shaping" the lens. Depending on how the molds are designed (in particular they may comprise an outer sleeve supporting the alignment of the mold halves) the first step of the two-step closing operation may already be sufficient to prevent further evaporation of the solvent from the flowable material so that even in case the mold is not completely closed in the first step (meaning that the final shape of the contact lens has not yet been determined) the second step of the two-step operation of closing the mold can be performed either in the local gas atmosphere or outside the local gas atmosphere or at the transition therebetween. Each of these scenarios is meant to be encompassed by this variant of the process.

After the step of (complete) closing the mold (which may be either performed in a one-step or in a two-step operation, as mentioned above, however, with the final shape of the lens being formed), the flowable material in the mold is polymerized and/or cross-linked so as to form the lens.

In a still further variant of the process according to the invention the local gas atmosphere comprises an inert gas and an amount of the solvent which is chosen such that the local gas atmosphere is non-explosive. This variant is particularly advantageous in case the solvent is explosive so that small sparks that may eventually occur would constitute a danger for the operators and/or the equipment. The solvent contained in the inert gas prevents the solvent contained in the starting material from evaporating, and the inert gas prevents the occurrence of explosions. Also, explosion protection is usually a requirement which must be fulfilled in order to obtain a permission to build up a respective manufacturing plant.

Yet in a further variant of the process according to the invention the local gas atmosphere comprises a relative solvent dampness which is more than 50%, preferably more than 70%, and even more preferably more than 90%. Such dampness is deemed to be sufficient for preventing even highly volatile solvents to escape within a period of time which is required for the dispensing and closing operations.

In addition, in a further variant of the process according to the invention, the amount of the solvent contained in the local gas atmosphere is chosen such that it is at least 10% below the lower explosive limit, more preferably at least 30% below the lower explosive limit, and even more preferably at least 50% below the lower explosive limit. This variant is particularly advantageous with respect to explosion protection. The greater the distance from the lower explosive limit, the better the explosion protection.

In the process according to the invention, the local gas atmosphere is provided in the interior of a housing where at least the dispensing means is arranged and where the step of dispensing the flowable material into the mold is performed. Even more preferably, in accordance with a further variant of the process according to the invention the step of closing the mold is also performed in the interior of the housing where the local gas atmosphere is provided. With respect to closing the mold within the local gas atmosphere in the interior of the housing or within the local gas atmosphere, the above-outlined considerations apply. While a housing in the interior of which the local gas atmosphere provided is only one alternative of how to establish and maintain the local gas atmosphere, other alternatives are conceivable. For example, the dosing tips and the molds may be provided with shutters or similar constructional elements so as to maintain the local gas atmosphere, however, the constructional expense for such alternatives is deemed higher while a housing is deemed a simple constructional alternative.

In the process according to the invention, the solvent is propanol. While propanol is only one out of a number of possible solvents propanol has shown to be a very suitable solvent. A suitable inert gas in accordance with one variant of the invention is nitrogen.

Another aspect of the invention deals with an apparatus for dispensing a flowable material comprising a volatile solvent into a mold, in particular a material for forming an ophthalmic lens, e.g. a contact lens, as it is specified in independent claim 9 directed to an apparatus. Specific embodiments of the apparatus according to the invention are the subject of the dependent claims 10-12 directed to the apparatus.

In particular, the apparatus according to the invention comprises the features recited in claim 9.

One specific embodiment of the apparatus according to the invention further comprises means for closing the mold. According to this embodiment, the dispensing means, the mold and the means for closing the mold are arranged and/or designed such that the flowable material is exposed only to the said local gas atmosphere from the dispensing of the flowable material until after the closing of the mold. This embodiment of the apparatus according to the invention is particularly advantageous in case the solvent is highly volatile so that it would otherwise evaporate within a very short period of time and, as a consequence, the starting material would dry within a very short period of time, with the negative consequences already discussed above. Closing the mold can be performed either in a one-step operation or in a two-step operation, as already mentioned above, and the above-outlined considerations with respect to closing the mold in the local gas atmosphere are also applicable here.

In the apparatus according to the invention, the means for providing the local gas atmosphere comprises a housing in the interior of which at least the dispensing means are arranged. Even more preferably, in accordance with a further embodiment of the apparatus according to the invention, the means for closing the mold are also arranged in the interior of the housing where the local gas atmosphere is provided. As already discussed above, while a housing in the interior of which the local gas atmosphere provided is only one alternative of how to establish and maintain the local gas atmosphere, other alternatives are conceivable. For example, the dosing tips and the molds may be provided with shutters or similar constructional elements so as to maintain the local gas atmosphere, however, the constructional expense for such alternatives is deemed higher while a housing is deemed a simple constructional alternative. As also mentioned above, closing of the mold can be performed in a one-step operation or in a two-step operation, and the above-outlined considerations with respect to closing the mold in the local gas atmosphere are also applicable here.

A further embodiment of the apparatus according to the invention further comprises an inlet gate and an outlet gate, the respective gate forming a border between an outer atmosphere and the local gas atmosphere provided in the interior of the housing. This embodiment constitutes a constructional approach in which a border is formed between a zone in which there is no local gas atmosphere and, accordingly, where there is no explosion protection nor any atmosphere preventing evaporation of solvent, and between a zone in which there is an explosion protection and a protection against evaporation of the solvent. This allows to reduce the zone where a housing must be present in which the local gas atmosphere must be maintained to those locations only where the afore-mentioned steps are to be performed.

The apparatus according to the invention further comprises means for measuring the oxygen content in the interior of the housing and means for venting the interior of the housing with an inert gas in case the measured oxygen content exceeds a predetermined threshold. Thus, in case the oxygen content comes close to or exceeds the predetermined threshold (e.g. the lower explosion limit) the housing is immediately vented with the inert gas so as to avoid any danger for the operators and/or the equipment.

### BRIEF DESCRIPTION OF THE DRAWINGS

Further advantageous aspects of the invention become apparent from the following description of embodiments of the invention with the aid of the drawings in which:
- Fig. 1: a schematic representation of a housing, an inlet gate and an outlet gate forming a border between an outer atmosphere and a local gas atmosphere in the interior of the housing, and
- Fig. 2: the housing, inlet gate and outlet gate of Fig. 1 with dispensing means, means for closing the mold and means for polymerization and/or crosslinking.

### DETAILED DESCRIPTION

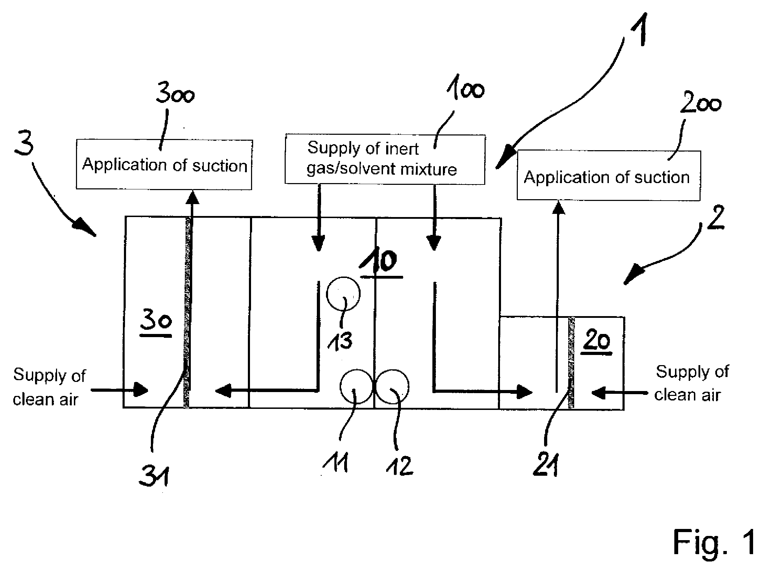

The invention will be explained in the following with the aid of Fig. 1 which shows a schematic representation of a housing 1, an inlet gate 2 and an outlet gate 3. Inlet gate 2 and outlet gate 3 form a border 21 and 31 in the form of a "wall" generated by the various flows. As can be seen in Fig. 1, during operation a mixture of an inert gas, e.g. nitrogen, and a solvent, e.g. propanol, is continuously supplied through the upper wall of housing 1 into the interior 10 thereof with the aid of a suitable supply means 100. As can further be seen from Fig. 1, suction is applied to the interior 20 of inlet gate 2 through the upper wall thereof with the aid of a suitable suction means 200, e.g. a pump. As a consequence, both clean air (which may have been scavenged, e.g. by means of a filter) and gas/solvent mixture are drawn into the interior 20 of inlet gate 2 through the application of suction to the interior 20 of inlet gate 2. The two flows (the inert gas / solvent mixture and the clean air) meet and generate the afore-mentioned "wall" separating the atmosphere in the interior 10 of housing 1 (in Fig. 1 on the left of border 21 or "wall") from the outer atmosphere (in Fig. 1 on the right of border 21 or "wall").

In a similar manner, clean air is drawn into the interior 30 of outlet gate 3 through the application of suction to the interior 30 of outlet gate 3, the suction being applied with the aid of a suitable suction means 300, e.g. a pump. The two flows (the inert gas / solvent mixture and the clean air) meet and generate the afore-mentioned "wall" separating the local gas atmosphere in the interior 10 of housing 1 (in Fig. 1 on the right of border 31 or "wall") from the outer atmosphere (in Fig. 1 on the left of border 31 or "wall"). It is to be noted that with respect to the local gas atmosphere, that part of the interior 20 of inlet gate 2 which is located on the side facing the interior 10 of housing 1 (i.e. that part on the left of border 21 or "wall") belongs to the interior 10 of housing 1 since it is essentially the same local gas atmosphere which is provided there. Similarly, with respect to the local gas atmosphere, that part of the interior 30 of outlet gate 3 which is located on the side facing the interior 10 of housing 1 (i.e. that part on the right of border 31 or "wall") belongs to the interior 10 of housing 1 since it is essentially the same local gas atmosphere which is provided there.

The local gas atmosphere in the interior 10 of housing 1 prevents solvent to evaporate from the lens forming material which is dispensed into the female mold halves, as will be described in more detail below. For that reason, the local gas atmosphere may comprise a relative solvent dampness which is more than 50%, preferably more than 70%, and even more preferably more than 90%. Also, the local gas atmosphere may be chosen such that it is non-explosive. For that reason, it may comprise an inert gas, e.g. nitrogen, and an amount of solvent, e.g. propanol, which is chosen such that the local gas atmosphere is non-explosive. More preferably, the local gas atmosphere is chosen such that it is at least 10% below the lower explosive limit, more preferably at least 30% below the lower explosive limit, and even more preferably at least 50% below the lower explosive limit. This is a safety measure in case sparks may be produced by any of the devices arranged within the said local atmosphere, so that explosions or fire can be prevented.

For monitoring the solvent dampness a first sensor 11 may be provided. Particularly in case propanol is used as a solvent, the measurement of the propanol content (e.g. in % per volume) is measured and in case a predetermined propanol content is reached representing or exceeding a predetermined distance from the lower explosion limit the interior 10 of housing 1 is automatically vented with inert gas only, e.g. with nitrogen. In addition, for measuring the oxygen content (e.g. in % per volume) contained in the local gas atmosphere a second sensor 12 may be provided. In case an oxygen content is measured which is close to or exceeds a predetermined threshold, the interior 10 of housing 1 is also vented with inert gas only, e.g. with nitrogen. Finally, a third sensor 13 may be provided for measuring the temperature in the interior 10 of housing 1. Since the distance from the lower explosion limit depends on the temperature in the interior 10 of housing 1, the propanol content measured with the aid of the first sensor 11 must be analyzed together with the respective temperature measured with the aid of the third sensor 13 in order to determine the true distance from the lower explosion limit.

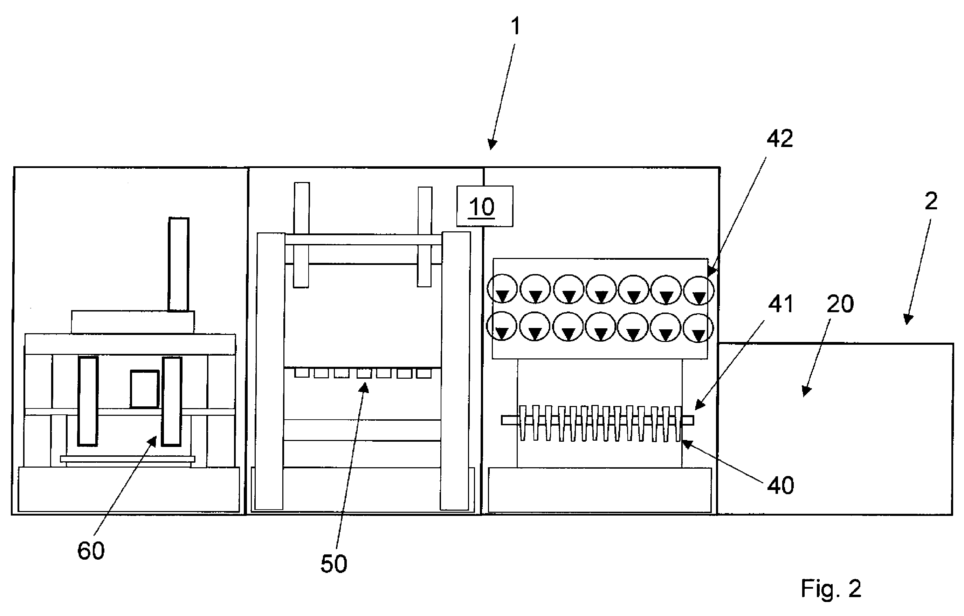

Fig. 2 shows housing 1, inlet gate 2 and outlet gate 3 of Fig. 1.. The dispensing means which in the embodiment shown comprise a plurality of dosing tips 40 fixedly arranged in a mounting bar 41 are arranged in the interior 10 of housing 1. However, the arrangement of the dosing tips 40 in the interior 10 of housing 1 is not mandatory, it is also conceivable that they are arranged in the local gas atmosphere but within the interior 20 of inlet gate 2 (i.e. on the left of border 21 or "wall"), since this part of the interior 20 "belongs" to the interior 10 of housing 1 (see above). Also, a corresponding plurality of dosing pumps 42 is shown in Fig. 2 with each dosing pump 42 being associated to a particular dosing tip 40. The number of dosing tips 40 and dosing pumps 42 can be chosen depending on the needs, however, in the embodiment shown fourteen dosing tips 40 are fixedly arranged in mounting bar 41 and, correspondingly, a number of fourteen pumps 42 is provided. Housing 1 may be embodied such that the pumps are also arranged in the interior 10 of housing 1, however, it is well conceivable that the pumps 42 be arranged outside the interior 10 of housing 1 (that is to say completely outside the local gas atmosphere) and to have only mounting bar 41 and the dosing tips 40 fixedly attached thereto arranged in the interior 10 of housing 1.

For the dispensing step, first of all a number of female mold halves (not shown) corresponding to the number of dosing tips 40 is arranged beneath the dosing tips 40, with each individual female mold half being arranged beneath an individual dosing tip. The female mold halves will be transported from the outside atmosphere through the interior of inlet gate 2 past border 21 or "wall" (see Fig. 1 ) into the local inert gas atmosphere with the aid of a suitable transport means which is known in the art. In this case, since the dispensing tips 40 are arranged in the interior 10 of housing 1 the female mold halves are transported until they reach the position beneath the respective dosing tips 40 in the interior 10 of housing 1. Mounting bar 41 together with the dosing tips 40 is then lowered until the dosing tips 40 are arranged immediately above the surface of the female mold halves. The lens forming material, in particular a silicon hydrogel material containing a highly volatile solvent, is then dispensed into the respective female mold half. The silicon hydrogel material contains a suitable amount of a highly volatile solvent, e.g. propanol, so that it is kept in a flowable state. In order to prevent the solvent from evaporating from the lens forming material the dispensing step is performed in the local gas atmosphere containing the afore-mentioned inert gas and a suitable amount of the solvent. This means that although the solvent contained in the lens forming material is highly volatile, it does not evaporate from the lens forming material thus keeping the lens forming material in a flowable state.

This prevents that the finished lenses may show streaks which may negatively affect visual acuity. Also, since the dosing tips 40 are arranged in the local gas atmosphere and, accordingly, the lens forming material is kept in a flowable state, no residues of the lens forming material remain on the dosing tip and may dry out there so that the accuracy of the amount of starting material subsequently dispensed into the mold is not negatively affected. Generally, as mentioned, pumps 42 may be arranged inside or outside the interior 10 of housing 1, however, in the described embodiment they are arranged inside the interior 10 of housing 1.

Once dispensing the lens forming material into the female mold halves has been completed, mounting bar 41 together with the dosing tips 40 is raised again, and the female mold halves with the lens forming material contained therein are moved to the next station within the interior 10 of housing where means 50 for (incompletely) closing the molds are arranged, that is to say means for engaging and aligning the male and female mold halves but not for completely closing them. During the transport, the lens forming material is only exposed to the local gas atmosphere so that the volatile solvent is prevented from evaporating from the lens forming material. As has already been mentioned above, the term "closing the molds" does not necessarily mean that closing the molds is performed in a one-step operation but rather comprises embodiments (as the one described here) in which complete closing of the mold is performed in a two-step operation. That means that after the first step of the closing operation (engagement, alignment, incomplete closing of the molds) the male and female mold halves are arranged in alignment with one another but have not been fully closed, that is to say they have not reached their final position relative to one another. Rather, the male and female mold halves are moved into their final position relative to one another in a second closing ("lens shaping") step. In their final position relative to one another the male and female mold halves may be arranged at a predetermined small distance from one another, as this is well known in the art.

While generally any suitable means for closing the molds are conceivable, in accordance with one embodiment of the invention, the means for closing the molds are designed such that the molds are closed in the described two-step operation. By way of example, closing of the molds may be performed as this is described in WO-99/20455. In the second step (complete closing of the molds), the male mold halves are moved into their final position relative to the female mold halves in accordance with a predetermined movement profile. In this final position the shape of the contact lens to be formed is determined by the shaping surfaces of the male and female mold halves ("shaping of the lens"). The predetermined movement profile is chosen such that no bubbles or inclusions occur (see WO 99/20455).

As mentioned above, the first step of the two-step operation of closing the mold is performed in the interior 10 of housing 1 in the local gas atmosphere. After the first step of the two-step operation of closing the molds has been completed the aligned molds are moved to the next station where the second step ("lens shaping") of the two-step closing operation is performed. In case molds as shown in WO 99/20455 are used (which may comprise an outer sleeve for engagement and alignment of the mold halves prior to completely closing them), the second step of the closing operation can be performed either completely in the interior 10 of housing 1 - i.e. in the local gas atmosphere on the right of "wall" 31, or can be performed completely outside the local gas atmosphere, i.e. on the left of "wall" 31, or can be performed at the transition therebetween, i.e. in the region of the "wall" 31. This is possible, since the sleeve of the molds of WO 99/20455 provides for a closed atmosphere inside the sleeve preventing the solvent from evaporation. In this station, where the second step of the closing operation is performed means 60 for completely closing the male and female mold halves (that is to say means for "shaping the lens") are arranged. As mentioned before, those parts of the inlet gate 2 and outlet gate 3 in which the local gas atmosphere (e.g. the propanol atmosphere) is provided belong to the interior 10 of housing 1 (see further above), that is to say that part of inlet gate 2 on the left of "wall" 21 and that part of outlet gate 3 on the right of "wall" 31. Once the mold has been completely closed, polymerizing and/or cross-linking of the "shaped" contact lens (the non-polymerized and non-cross-linked lens forming material in the completely close mold) is performed. In the embodiment shown this step of polymerizing and/or crosslinking is performed outside the local gas atmosphere (not shown), that is to say after the lens molds have been completely transported through border or "wall" 31, so that the space where the local gas atmosphere must be provided, can be kept small. After the lens forming material has been polymerized and/or cross-linked to form the lenses, the molds containing the polymerized and/or cross-linked lenses can be opened, the lenses can be released from the molds, cleaned, inspected, and the molds can be cleaned and then reused, etc.. These steps occur in the outer atmosphere (i.e. not in the local inert gas atmosphere).

Overall, the process and apparatus according to the invention prevent that the finished lenses may show streaks which may negatively affect visual acuity. Also, since the dosing tips 40 are arranged in the local gas atmosphere and, accordingly, the lens forming material is kept in a flowable state, no residues of the lens forming material remain on the dosing tip 40 and may dry out there so that the accuracy of the amount of starting material dispensed into the mold is not negatively affected.

The invention has been described with the aid of a specific embodiment of the process or apparatus, respectively. However, the invention is not limited to the specific embodiment described but rather various changes and modifications are possible without departing from the general concept underlying the invention. Therefore, the scope of protection is defined by the appended claims.

## Claims

1. Process for dispensing a flowable material comprising a volatile solvent into a mold, in particular a material for forming an ophthalmic lens, e.g. a contact lens, the process comprising the steps of:
- providing a mold;
- providing a dispensing means (40,41,42);
- arranging the mold underneath the dispensing means (40,41,42);
- dispensing the flowable material comprising the volatile solvent into the mold, the step of dispensing being performed in a local gas atmosphere substantially preventing the solvent from evaporating from the flowable material,
**characterized in that**
- the local gas atmosphere is provided in the interior (10) of a housing (1) where the dispensing means (40) is arranged and where the step of dispensing the flowable material into the mold is performed
- means (12) are provided for measuring the oxygen content in the interior (10) of the housing (1), and means for venting the interior of the housing with an inert gas in case the measured oxygen content exceeds a predetermined threshold.

2. Process according to claim 1, wherein after dispensing the flowable material the mold is closed, and wherein during the step of dispensing until after the closing of the mold the flowable material is exposed only to the said local gas atmosphere.

3. Process according to any one of the preceding claims, wherein the local gas atmosphere comprises an inert gas and an amount of the solvent which is chosen such that the local gas atmosphere is non-explosive.

4. Process according to claim 3, wherein the local gas atmosphere comprises a relative solvent dampness which is more than 50%, preferably more than 70%, and even more preferably more than 90%.

5. Process according to claim 3 or claim 4, wherein the amount of the solvent contained in the local gas atmosphere is chosen such that it is at least 10% below the lower explosive limit, more preferably at least 30% below the lower explosive limit, and even more preferably at least 50% below the lower explosive limit.

6. Process according to any one of the preceding claims, wherein the step of closing the mold is also performed in the interior (10) of the housing (1) where the local gas atmosphere is provided.

7. Process according to any one of the preceding claims, wherein the solvent is propanol.

8. Process according to any one of claims 3 to 7, wherein the inert gas is nitrogen.

9. Apparatus for dispensing a flowable material comprising a volatile solvent into a mold, in particular a material for forming an ophthalmic lens, e.g. a contact lens, the apparatus comprising:
- dispensing means (40,41,42) for dispensing the flowable material into the mold
- means for arranging the mold underneath the dispensing means (40,41,42)
- means (100) for providing a local gas atmosphere substantially preventing the solvent from evaporating from the flowable material,
**characterized in that** the means for providing the local gas atmosphere comprises a housing (1) in the interior (10) of which at least the dispensing means (40,41,42) are arranged, and **in that** the apparatus comprises means (12) for measuring the oxygen content in the interior (10) of the housing (1), and means for venting the interior of the housing with an inert gas in case the measured oxygen content exceeds a predetermined threshold.

10. Apparatus according to claim 9, further comprising means (50, 60) for closing the mold, wherein the dispensing means (40,41,42), the mold and the means (50, 60) for closing the mold are arranged and/or designed such that the flowable material is exposed only to the said local gas atmosphere from the dispensing of the flowable material until after the closing of the mold.

11. Apparatus according to any one of claims 9 or 10, wherein the means (50, 60) for closing the mold are also arranged in the interior of the housing where the local gas atmosphere is provided.

12. Apparatus according to any one of claims 9 to 11, further comprising an inlet gate (2) and an outlet gate (3), the respective gate (2, 3) forming a border (21, 31) between an outer atmosphere and the local gas atmosphere provided in the interior of the housing.

## Patentansprüche

1. Verfahren zum Abgeben eines fließfähigen Materials umfassend ein flüchtiges Lösungsmittel in eine Giessform, insbesondere ein Material zum Bilden einer ophthalmischen Linse, z.B. einer Kontaktlinse, wobei das Verfahren die Schritte umfasst:
- Bereitstellen einer Giessform;
- Bereitstellen eines Abgabemittels (40, 41, 42);
- Anordnen der Giessform unter dem Abgabemittel (40, 41, 42);
- Abgeben des fließfähigen Materials umfassend das flüchtige Lösungsmittel in die Giessform, wobei der Schritt des Abgebens in einer lokalen Gasatmosphäre durchgeführt wird, die im Wesentlichen verhindert, dass das Lösungsmittel aus dem fließfähigen Material verdampft,
**dadurch gekennzeichnet, dass**
- die lokale Gasatmosphäre im Inneren (10) eines Gehäuses (1) bereitgestellt wird, wo das Abgabemittel (40) angeordnet ist und wo der Schritt des Abgebens des fließfähigen Materials in die Giessform durchgeführt wird,
- Mittel (12) bereitgestellt werden zum Messen des Sauerstoffgehalts im Inneren (10) des Gehäuses (1) und Mittel zum Belüften des Inneren des Gehäuses mit einem inerten Gas, falls der gemessene Sauerstoffgehalt einen vorbestimmten Schwellwert übersteigt.

2. Verfahren nach Anspruch 1, wobei nach dem Abgeben des fließfähigen Materials die Giessform geschlossen wird, und wobei während des Schritts des Abgebens bis nach dem Schließen der Giessform das fließfähige Material nur der lokalen Gasatmosphäre ausgesetzt ist.

3. Verfahren nach einem der vorangehenden Ansprüche, wobei die lokale Gasatmosphäre ein inertes Gas und eine Menge des Lösungsmittels umfasst, welche derart gewählt ist, dass die lokale Gasatmosphäre nicht explosiv ist.

4. Verfahren nach Anspruch 3, wobei die lokale Gasatmosphäre eine relative Lösungsmittelfeuchte aufweist, die über 50%, bevorzugt über 70%, und besonders bevorzugt über 90% beträgt.

5. Verfahren nach Anspruch 3 oder Anspruch 4, wobei die Menge des in der lokalen Gasatmosphäre enthaltenen Lösungsmittels derart gewählt ist, dass sie mindestens 10% unter der unteren Explosionsgrenze liegt, bevorzugt mindestens 30% unter der unteren Explosionsgrenze, und besonders bevorzugt mindestens 50% unter der unteren Explosionsgrenze.

6. Verfahren nach einem der vorangehenden Ansprüche, wobei der Schritt des Schließens der Giessform ebenfalls im Inneren (10) des Gehäuses (1) durchgeführt wird, wo die lokale Gasatmosphäre bereitgestellt wird.

7. Verfahren nach einem der vorangehenden Ansprüche, wobei das Lösungsmittel Propanol ist.

8. Verfahren nach einem der Ansprüche 3 bis 7, wobei das inerte Gas Stickstoff ist.

9. Vorrichtung zum Abgeben eines fließfähigen Materials umfassend ein flüchtiges Lösungsmittel in eine Giessform, insbesondere ein Material zum Bilden einer ophthalmischen Linse, z.B. einer Kontaktlinse, wobei die Vorrichtung umfasst:
- Abgabemittel (40, 41, 42) zum Abgeben des fließfähigen Materials in die Giessform,
- Mittel zum Anordnen der Giessform unter dem Abgabemittel (40, 41, 42),
- Mittel (100) zum Bereitstellen einer lokalen Gasatmosphäre, die im Wesentlichen verhindert, dass das Lösungsmittel aus dem fließfähigen Material verdampft, **dadurch gekennzeichnet, dass** das Mittel zum Bereitstellen der lokalen Gasatmosphäre ein Gehäuse (1) umfasst, in dessen Innerem (10) mindestens die Abgabemittel (40, 41, 42) angeordnet sind, **dadurch gekennzeichnet**, und dass die Vorrichtung Mittel (12) umfasst zum Messen des Sauerstoffgehalts im Inneren (10) des Gehäuses (1), sowie Mittel zum Belüften des Inneren des Gehäuses mit einem inerten Gas, falls der gemessene Sauerstoffgehalt einen vorbestimmten Schwellenwert übersteigt.

10. Vorrichtung nach Anspruch 9, weiterhin umfassend Mittel (50, 60) zum Schließen der Giesssform, wobei die Abgabemittel (40, 41, 42), die Giessform und die Mittel (50, 60) zum Schließen der Giessform derart angeordnet und/oder gestaltet sind, dass das fließfähige Material von der Abgabe des fließfähigen Materials bis nach dem Schließen der Giessform nur der lokalen Gasatmosphäre ausgesetzt ist.

11. Vorrichtung nach einem der Ansprüche 9 oder 10, wobei die Mittel (50, 60) zum Schließen der Giessform ebenfalls im Inneren des Gehäuses angeordnet sind, wo die lokale Gasatmosphäre bereitgestellt ist.

12. Vorrichtung nach einem der Ansprüche 9 bis 11, weiterhin umfassend ein Einlassschleuse (2) und eine Auslassschleuse (3), wobei die jeweilige Schleuse (2, 3) eine Grenze (21, 31) zwischen einer äußeren Atmosphäre und der im Inneren des Gehäuses bereitgestellten lokalen Gasatmosphäre bildet.

## Revendications

1. Procédé pour distribuer un matériau fluide comprenant un solvant volatil dans un moule, en particulier un matériau pour la formation d'une lentille ophtalmique, p. ex. une lentille de contact, le procédé comprenant les étapes suivantes :
- mettre à disposition d'un moule ;
- mettre à disposition d'un moyen de distribution (40, 41, 42) ;
- agencer le moule sous le moyen de distribution (40, 41, 42) ;
- distribuer du matériau fluide comprenant le solvant volatil dans le moule, l'étape de distribution étant réalisée dans une atmosphère gazeuse locale qui empêche essentiellement l'évaporation du solvant du matériau fluide,
**caractérisé en ce que**
- l'atmosphère gazeuse locale est mise à disposition à l'intérieur (10) d'un boîtier (1) dans lequel le moyen de distribution (40) est agencé et dans lequel l'étape de distribution du matériau fluide dans le moule est réalisée,
- des moyens (12) sont mis à disposition pour mesurer la teneur en oxygène à l'intérieur (10) du boîtier (1), et des moyens pour ventiler l'intérieur du boîtier avec un gaz inerte au cas où la teneur en oxygène mesurée dépasse un seuil prédéterminé.

2. Procédé selon la revendication 1, dans lequel le moule est fermé après avoir distribué le matériau fluide et dans lequel le matériau fluide est exposé uniquement à ladite atmosphère gazeuse locale pendant l'étape de distribution jusqu'après la fermeture du moule.

3. Procédé selon l'une quelconque des revendications précédentes, dans lequel l'atmosphère gazeuse locale comprend un gaz inerte et une quantité du solvant qui est choisie de sorte que l'atmosphère gazeuse locale soit non explosive.

4. Procédé selon la revendication 3, dans lequel l'atmosphère gazeuse locale comporte une humidité de solvant relative qui est supérieure à 50 %, de manière préférentielle supérieure à 70 %, et de manière encore plus préférentielle supérieure à 90 %.

5. Procédé selon la revendication 3 ou la revendication 4, dans lequel la quantité du solvant contenue dans l'atmosphère gazeuse locale est choisie telle qu'elle soit au moins 10 % en dessous de la limite d'explosion inférieure, de manière plus préférentielle au moins 30 % en dessous de la limite d'explosion inférieure, et de manière encore plus préférentielle au moins 50 % en dessous de la limite d'explosion inférieure.

6. Procédé selon l'une quelconque des revendications précédentes, dans lequel l'étape de fermeture du moule est également réalisée à l'intérieur (10) du boîtier (1) où l'atmosphère gazeuse locale est mise à disposition.

7. Procédé selon l'une quelconque des revendications précédentes, dans lequel le solvant est le propanol.

8. Procédé selon l'une quelconque des revendications 3 à 7, dans lequel le gaz inerte est l'azote.

9. Appareil pour distribuer un matériau fluide comprenant un solvant volatil dans un moule, en particulier un matériau pour la formation d'une lentille ophtalmique, p. ex. une lentille de contact, l'appareil comprenant :
- des moyens de distribution (40, 41, 42) pour distribuer le matériau fluide dans le moule,
- des moyens pour agencer le moule sous les moyens de distribution (40, 41, 42),
- un moyen (100) pour mettre à disposition une atmosphère gazeuse locale qui empêche essentiellement le solvant de s'évaporer du matériau fluide, **caractérisé en ce que** le moyen pour mettre à disposition l'atmosphère gazeuse locale comprend un boîtier (1) à l'intérieur (10) duquel au moins les moyens de distribution (40, 41, 42) sont agencés, et **en ce que** l'appareil comprend des moyens (12) pour mesurer la teneur en oxygène à l'intérieur (10) du boîtier (1), et des moyens pour ventiler l'intérieur du boîtier avec un gaz inerte au cas où la teneur en oxygène mesurée dépasse un seuil prédéterminé.

10. Appareil selon la revendication 9, comprenant en outre des moyens (50, 60) pour fermer le moule, les moyens de distribution (40, 41, 42), le moule et les moyens (50, 60) pour fermer le moule étant agencés et/ou conçus pour que le matériau fluide soit exposé uniquement à ladite atmosphère gazeuse locale depuis la distribution du matériau fluide jusqu'après la fermeture du moule.

11. Appareil selon l'une quelconque des revendications 9 ou 10, dans lequel les moyens (50, 60) pour fermer le moule sont également agencés à l'intérieur du boîtier où l'atmosphère gazeuse locale est mise à disposition.

12. Appareil selon l'une quelconque des revendications 9 à 11, comprenant en outre un passage d'entrée (2) et un passage de sortie (3), les passages (2, 3) respectives formant une frontière (21, 31) entre une atmosphère extérieure et l'atmosphère gazeuse locale mise à disposition à l'intérieur du boîtier.
